# EUROPÄISCHE PATENTSCHRIFT

(11) **EP 3 577 003 B1**
(45) Veröffentlichungstag und Bekanntmachung des Hinweises auf die Patenterteilung: **14.01.2026**
(21) Anmeldenummer: 18710382.5
(22) Anmeldetag: 01.03.2018
(51) Int. Cl.: B61L 3/12, B61L 25/02

(54) **FAHRZEUG MIT EINER ERKENNUNGSEINRICHTUNG ZUM ERKENNEN EINER STRECKENSEITIGEN SENDEEINRICHTUNG UND VERFAHREN ZU DEREN BETRIEB**
VEHICLE HAVING A DETECTION DEVICE FOR DETECTING A ROUTE-SIDE TRANSMITTER DEVICE AND METHOD FOR OPERATING SAME
VÉHICULE ÉQUIPÉ D'UN DISPOSITIF D'IDENTIFICATION SERVANT À IDENTIFIER UN DISPOSITIF D'ENVOI CÔTÉ VOIE ET PROCÉDÉ POUR LE FAIRE FONCTIONNER

(30) Priorität: 29.03.2017 DE 102017205356
(43) Veröffentlichungstag der Anmeldung: 11.12.2019
(73) Patentinhaber: Siemens Mobility GmbH, 80997 München (DE)
(72) Erfinder: HOLLNAGEL, Gerd, 38533 Vordorf (DE)
(74) Vertreter: Siemens Patent Attorneys
(86) Internationale Anmeldenummer: PCT/EP2018/055041
(87) Internationale Veröffentlichungsnummer: WO 2018/177676

(56) Entgegenhaltungen:
- EP-A1- 2 388 857
- WO-A1-2016/012106
- JP-A- S57 131 004

## Beschreibung

Die Erfindung bezieht sich auf ein Fahrzeug mit einer Erkennungseinrichtung zum Erkennen einer streckenseitigen Sendeeinrichtung.

Im Bereich der Ortung von Schienenfahrzeugen ist die so genannte Eurobalise bekannt. Bei der Eurobalise handelt es sich um eine passive Balise, die bei Annäherung eines Schienenfahrzeugs mittels auf elektromagnetischem Wege übertragener Energie in Betrieb genommen wird und nachfolgend auf einer Frequenz von 4 MHz ein Positionssignal aussendet, das einem passierenden Schienenfahrzeug die Ortung ermöglicht. Konkret enthält das Positionssignal eine Kodierung, die die Balise identifiziert, so dass das Fahrzeug, dem die Positionen von im Streckennetz verlegten Balisen bekannt ist, seine eigene Position bestimmen kann.

Dokument JP S 57 131 004 A beschreibt die Vereinfachung einer Schaltung eines kleinen Positionsdetektors durch ein Verfahren, bei dem eine Phase eines Signals einer horizontalen und vertikalen Rahmenantenne eines sich bewegenden Objekts, das sich über eine induktive Transpositionsband-Funkleitung bewegt, direkt von einem Mikrocomputer verarbeitet wird. Ein Sender sendet ein Hochfrequenzsignal. Die horizontalen und vertikalen Rahmenantennen sind am sich bewegenden Objekt befestigt. Nachdem die Durchgänge durch die Gatter mittels eines Zeitteilungssignals von einem Mikrocomputer geöffnet und geschlossen wurden, wird der Empfangspegel jeder Antenne zeitlich als digitaler Betrag über einen Filter, in den Mikrocomputer eingelesen.

Dokument WO 2016 012 106 A1 beschreibt ein System und ein Verfahren zum Lokalisieren der Mitte einer Balise, die entlang einer geführten Fahrzeugroute installiert ist. Das System umfasst einen Emitter, der zum Einspeisen des Balisensignals konfiguriert ist, sowie einen Empfänger, der eine erste horizontale Empfangsschleife und eine zweite horizontale Empfangsschleife zum Aufnehmen eines von der Balise erzeugten elektromagnetischen Signals und zum Liefern eines ersten Signals und eines zweiten Signals an eine Verarbeitungseinheit aufweist. Der Erfindung liegt die Aufgabe zugrunde, ein Fahrzeug mit einer Erkennungseinrichtung anzugeben, die unempfindlicher gegenüber Störeinstrahlung, insbesondere gegenüber einem Übersprechen durch Fremdstrahlung, ist als die von vorbekannten Fahrzeugen.

Diese Aufgabe wird erfindungsgemäß durch ein Fahrzeug mit den Merkmalen gemäß Patentanspruch 1 gelöst. Vorteilhafte Ausgestaltungen des erfindungsgemäßen Fahrzeugs sind in Unteransprüchen angegeben.

Danach ist erfindungsgemäß vorgesehen, dass die Erkennungseinrichtung zumindest zwei Empfangsantennen aufweist, die zum Empfangen einer in Fahrzeuglängsrichtung ausgerichteten Magnetfeldkomponente elektromagnetischer Strahlung, die von einer streckenseitigen Sendeeinrichtung ausgesandt wird, geeignet sind, und die zumindest zwei Empfangsantennen in Fahrzeuglängsrichtung versetzt angeordnet sind.

Ein wesentlicher Vorteil des erfindungsgemäßen Fahrzeugs ist darin zu sehen, dass deren Erkennungseinrichtung streckenseitige Sendeeinrichtungen wie beispielsweise Balisen bei einem Überfahren in Fahrzeuglängsrichtung besonders zuverlässig richtig erkennen kann. Im Unterschied zu Erkennungseinrichtungen vorbekannter Fahrzeuge erfolgt bei dem erfindungsgemäßen Fahrzeug bzw. bei der Erkennungseinrichtung des erfindungsgemäßen Fahrzeugs der Empfang speziell der in Fahrzeuglängsrichtung ausgerichteten Magnetfeldkomponente, so dass - wie erfinderseitig festgestellt wurde - eine etwaige Störung des Empfangsbetriebs durch Fremdstrahlung deutlich weniger, wenn überhaupt, auftritt als bei Erkennungseinrichtungen wie den heutzutage üblichen, die die in vertikaler Richtung bzw. in Fahrzeug-Z-Richtung ausgerichtete Magnetfeldkomponente messen.

Bei dem Fahrzeug handelt es sich vorzugsweise um ein Schienenfahrzeug und bei der streckenseitigen Sendeeinrichtung um eine streckenseitige Balise.

Erfindungsgemäß ist außerdem vorgesehen, dass jede der zumindest zwei Empfangsantennen jeweils mindestens eine Leiterschleife umfasst, deren Flächennormale in Fahrzeuglängsrichtung ausgerichtet ist.

Der Abstand zwischen einer ersten Empfangsantenne der zumindest zwei Empfangsantennen der Erkennungseinrichtung und einer zweiten Empfangsantenne der zumindest zwei Empfangsantennen der Erkennungseinrichtung ist bevorzugt derart bemessen, dass bei einem Überfahren der Sendeeinrichtung die Phase des Messwerts der ersten Empfangsantenne das Vorzeichen wechselt, wenn der Betrag des Messwerts der zweiten Empfangsantenne maximal wird, und die Phase des Messwerts der zweiten Empfangsantenne das Vorzeichen wechselt, wenn der Betrag des Messwerts der ersten Empfangsantenne maximal wird.

Der Abstand zwischen einer ersten Empfangsantenne der zumindest zwei Empfangsantennen der Erkennungseinrichtung und einer zweiten Empfangsantenne der zumindest zwei Empfangsantennen der Erkennungseinrichtung liegt vorzugsweise zwischen 10 und 30 cm, insbesondere dann, wenn die Erkennungseinrichtung zum Erkennen von Eurobalisen eingesetzt werden soll. Bei Eurobalisen liegt der Abstand zwischen Querleitern, die Magnetfeldkomponenten in Fahrzeuglängsrichtung erzeugen, üblicherweise im Bereich von ca. 20 cm, so dass ein Empfangsantennenabstand zwischen 10 und 30 cm besonders geeignet ist.

Als besonders vorteilhaft wird es angesehen, wenn die Erkennungseinrichtung zum Erkennen elektromagnetischer Strahlung einer streckenseitigen Sendeeinrichtung ausgebildet ist, die mindestens eine streckenseitige Leiterschleife umfasst, deren Flächennormale vertikal ausgerichtet ist, wobei ein erster Querleiter dieser streckenseitigen Leiterschleife senkrecht zur Streckenlängsrichtung angeordnet ist und ein dazu in einem vorgegebenen Querleiterabstand angeordneter zweiter Querleiter ebenfalls senkrecht zur Streckenlängsrichtung angeordnet ist, und wobei der Abstand zwischen einer ersten Empfangsantenne der Erkennungseinrichtung und einer zweiten Empfangsantenne der Erkennungseinrichtung so groß wie der Querleiterabstand ist oder in einem Bereich von ± 50% des Querleiterabstands liegt.

Mittig zwischen der ersten und zweiten Empfangsantenne können darüber hinaus weitere Empfangsantennen, also beispielsweise eine dritte Empfangsantenne, angeordnet sein.

Die drei oder mehr Empfangsantennen sind vorzugsweise äquidistant angeordnet.

Die Erfindung bezieht sich darüber hinaus auf eine Anordnung mit zumindest einem Fahrzeug und zumindest einer streckenseitigen Sendeeinrichtung. Erfindungsgemäß ist bezüglich einer solchen Anordnung vorgesehen, dass das zumindest eine Fahrzeug ein Fahrzeug ist, wie es oben beschrieben worden ist.

Bezüglich der Vorteile dieser Anordnung sei auf die obigen Ausführungen im Zusammenhang mit dem erfindungsgemäßen Fahrzeug verwiesen.

Vorteilhaft ist es bei einer solchen Anordnung, wenn der **Ab**stand zwischen einer ersten und einer zweiten Empfangsantenne der Erkennungseinrichtung, insbesondere der Abstand zwischen der in Fahrzeuglängsrichtung gesehen vordersten und der in Fahrzeuglängsrichtung gesehen hintersten Empfangsantenne im Falle von mehr als zwei Empfangsantennen, derart bemessen ist, dass bei einem Überfahren der Sendeeinrichtung die Phase des Messwerts der ersten, insbesondere der vordersten, Empfangsantenne das Vorzeichen wechselt, wenn der Betrag des Messwerts der zweiten, insbesondere der hintersten, Empfangsantenne - vorzugsweise erstmals - maximal wird, und die Phase des Messwerts der zweiten, insbesondere der hintersten, Empfangsantenne das Vorzeichen wechselt, wenn der Betrag des Messwerts der ersten, insbesondere der vordersten, Empfangsantenne - vorzugsweise erneut - maximal wird.

Auch ist bei einer solchen Anordnung von Vorteil, wenn die streckenseitige Sendeeinrichtung mindestens eine streckenseitige Leiterschleife umfasst, deren Flächennormale vertikal ausgerichtet ist, ein erster Querleiter der streckenseitigen Leiterschleife senkrecht zur Streckenlängsrichtung angeordnet ist und ein dazu in einem vorgegebenen Querleiterabstand angeordneter zweiter Querleiter ebenfalls senkrecht zur Streckenlängsrichtung angeordnet ist, und der Abstand zwischen den Empfangsantennen der Erkennungseinrichtung im Falle zweier Empfangsantennen oder der Abstand zwischen der in Fahrzeuglängsrichtung gesehen vordersten und der in Fahrzeuglängsrichtung gesehen hintersten Empfangsantenne im Falle von mehr als zwei Empfangsantennen so groß wie der Querleiterabstand ist oder in einem Bereich von ± 50% des Querleiterabstands liegt.

Auch bezieht sich die Erfindung auf eine Erkennungseinrichtung zum Erkennen einer streckenseitigen Sendeeinrichtung. Erfindungsgemäß ist bezüglich einer solchen Erkennungseinrichtung vorgesehen, dass diese zumindest zwei Empfangsantennen aufweist, die zum Empfangen einer Magnetfeldkomponente elektromagnetischer Strahlung, die von der streckenseitigen Sendeeinrichtung ausgesandt wird, geeignet sind, und die zumindest zwei Empfangsantennen versetzt angeordnet sind.

Erfindungsgemäß ist auch vorgesehen, dass diese Erkennungseinrichtung an einem Fahrzeug derart montierbar ist, dass die zumindest zwei Empfangsantennen zum Empfangen einer in Fahrzeuglängsrichtung ausgerichteten Magnetfeldkomponente der elektromagnetischen Strahlung geeignet sind und die zumindest zwei Empfangsantennen in Fahrzeuglängsrichtung versetzt angeordnet sind.

Die Erfindung bezieht sich darüber hinaus auf ein Verfahren zum Betreiben einer Anordnung, die zumindest ein Fahrzeug und zumindest eine streckenseitige Sendeeinrichtung umfasst. Erfindungsgemäß ist bezüglich eines solchen Verfahrens vorgesehen, dass eine in Streckenlängsrichtung ausgerichtete Magnetfeldkomponente elektromagnetischer Strahlung, die von der streckenseitigen Sendeeinrichtung ausgesandt wird, mit zumindest zwei Empfangsantennen, die in Streckenlängsrichtung versetzt angeordnet sind, empfangen wird.

Bezüglich der Vorteile dieses Verfahrens sei auf die obigen Ausführungen im Zusammenhang mit dem erfindungsgemäßen Fahrzeug verwiesen.

Als besonders vorteilhaft wird es angesehen, wenn der Abstand zwischen einer ersten und einer zweiten Empfangsantenne der Erkennungseinrichtung, insbesondere der Abstand zwischen der in Fahrzeuglängsrichtung gesehen vordersten und der in Fahrzeuglängsrichtung gesehen hintersten Empfangsantenne im Falle von mehr als zwei Empfangsantennen, derart bemessen ist, dass bei einem Überfahren der Sendeeinrichtung die Phase des Messwerts der ersten, insbesondere der vordersten, Empfangsantenne das Vorzeichen wechselt, wenn der Betrag des Messwerts der zweiten, insbesondere der hintersten, Empfangsantenne - vorzugsweise erstmals - maximal wird, und die Phase des Messwerts der zweiten, insbesondere der hintersten, Empfangsantenne das Vorzeichen wechselt, wenn der Betrag des Messwerts der ersten, insbesondere der vordersten, Empfangsantenne - vorzugsweise erneut - maximal wird, und die Erkennungseinrichtung die Messwerte der Empfangsantennen auswertet.

Die Erfindung wird nachfolgend anhand von Ausführungsbeispielen näher erläutert; dabei zeigen beispielhaft
- Figur 1: eine Anordnung mit einem Schienenfahrzeug, das eine mit einer streckenseitigen Sendeeinrichtung ausgestattete Schienenstrecke befährt, in einer Draufsicht,
- Figur 2: die Anordnung gemäß Figur 1 in einer schematischen dreidimensionalen Darstellung schräg von der Seite,
- Figur 3: in einem zweidimensionalen Schnitt das von der streckenseitigen Sendeeinrichtung gemäß Figur 1 erzeugte Magnetfeld,
- Figur 4: die von Empfangsantennen des Schienenfahrzeugs gemäß Figur 1 aufgenommene Empfangsleistung - bezogen auf die in Fahrzeuglängsrichtung ausgerichtete Magnetfeldkomponente der von der streckenseitigen Sendeeinrichtung ausgesandten Strahlung - in Abhängigkeit von dem jeweiligen Ort des Schienenfahrzeugs auf der Schienenstrecke,
- Figur 5: ein Ausführungsbeispiel für eine Anordnung, bei der eine Empfangseinrichtung des Schienenfahrzeugs mit drei Empfangsantennen ausgestattet ist, und
- Figur 6: die Anordnung gemäß Figur 5 in einer vereinfachten dreidimensionalen Darstellung schräg von der Seite.

In den Figuren werden der Übersicht halber für identische oder vergleichbare Komponenten stets dieselben Bezugszeichen verwendet.

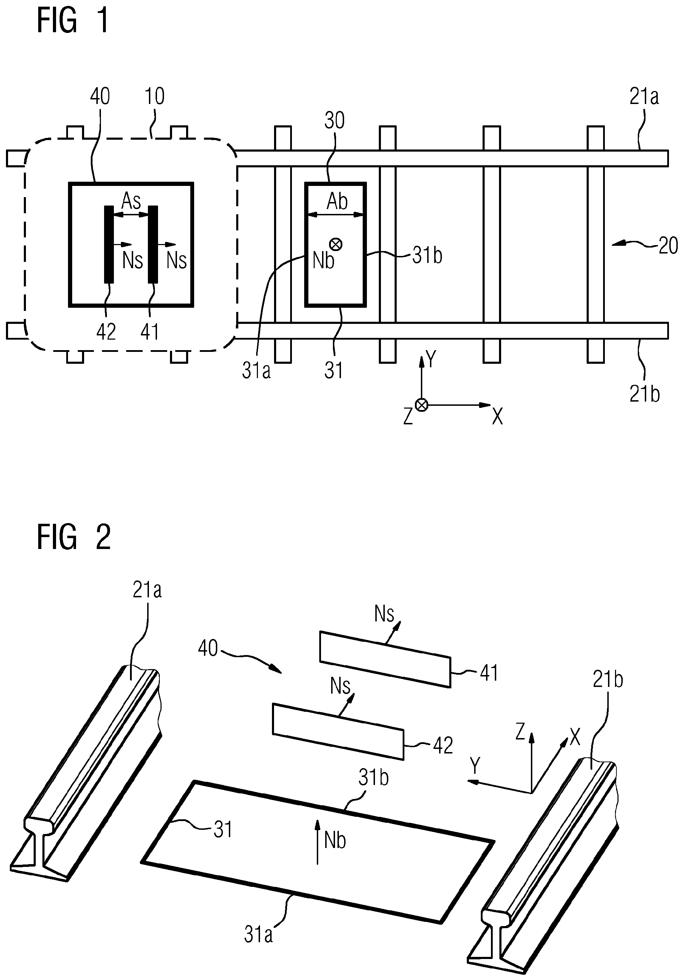

Die Figur 1 zeigt ein Schienenfahrzeug 10, das eine Schienenstrecke 20 befährt. Die Schienenstrecke 20 umfasst zwei parallel angeordnete Schienen 21a und 21b.

Die Schienenstrecke 20 ist außerdem mit einer streckenseitigen Sendeeinrichtung 30 ausgestattet, bei der es sich um einen Transponder handeln kann, insbesondere in Form einer Balise, wie sie im Bereich der Eisenbahntechnik **z. B.** als Eurobalise bekannt ist. Die streckenseitige Sendeeinrichtung 30 weist einen ersten, in der Figur 1 linken Querleiter 31a sowie einen zweiten, in der Figur 1 rechten Querleiter 31b auf. Die beiden Querleiter 31a und 31b erstrecken sich in Y-Richtung, also senkrecht zur Längsrichtung X der Schienenstrecke 20 und damit senkrecht zur Längsrichtung X des Schienenfahrzeugs 10. Der Abstand zwischen den beiden Querleitern 31a und 31b ist in der Figur 1 mit dem Bezugszeichen Ab gekennzeichnet.

Die beiden Querleiter 31a und 31b bilden Bestandteile einer Leiterschleife 31 oder einer mehrere Leiterschleifen 31 umfassenden Leiterspule, deren Flächennormale in der Figur 1 mit dem Bezugszeichen Nb gekennzeichnet ist. Die Flächennormale Nb erstreckt sich aus der Bildebene entlang der Z-Richtung heraus.

Fährt das Schienenfahrzeug 10 bei der Darstellung gemäß Figur 1 von links nach rechts, so wird es die streckenseitige Sendeeinrichtung 30 passieren. Um die streckenseitige Sendeeinrichtung 30 erkennen zu können, ist das Schienenfahrzeug 10 mit einer Erkennungseinrichtung 40 ausgestattet.

Die Erkennungseinrichtung 40 weist eine erste, beim Fahren in Richtung auf die streckenseitige Sendeeinrichtung 30 vordere Empfangsantenne 41 sowie eine zweite, beim Fahren in Richtung auf die streckenseitige Sendeeinrichtung 30 hintere Empfangsantenne 42 auf. Der Abstand zwischen den beiden Empfangsantennen 41 und 42 ist in der Figur 1 mit dem Bezugszeichen As gekennzeichnet.

Die beiden Empfangsantennen 41 und 42 umfassen jeweils eine Leiterschleife oder eine durch mehrere Leiterschleifen gebildete Leiterspule, deren Flächennormale in der Figur 1 mit dem Bezugszeichen Ns gekennzeichnet ist. Die Flächennormale ist in Fahrzeuglängsrichtung X ausgerichtet und steht somit senkrecht zur Flächennormalen Nb der streckenseitigen Leiterschleife 31.

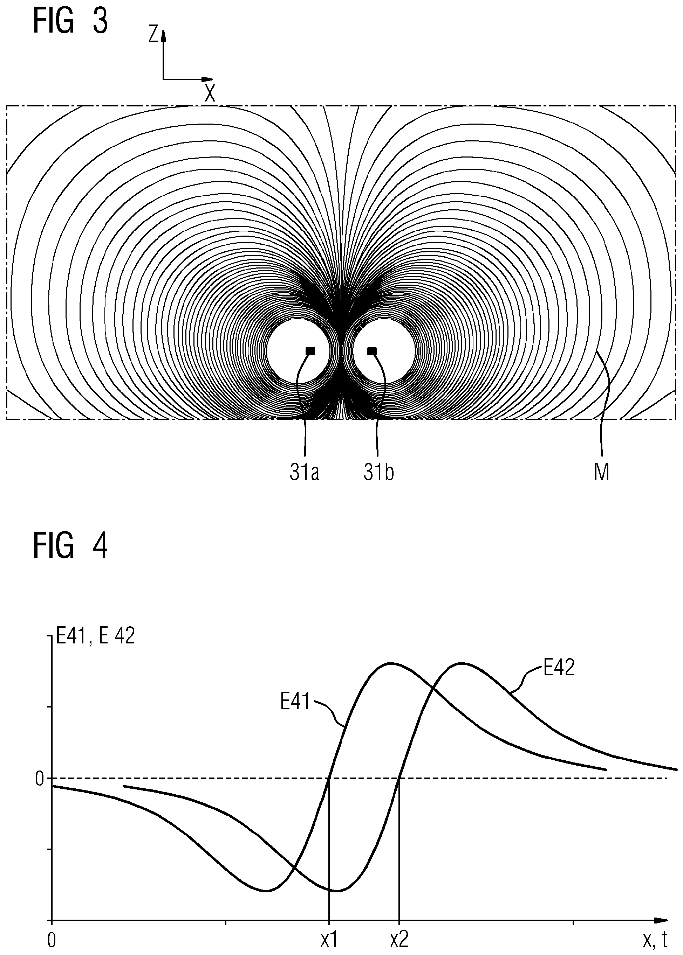

Fährt das Schienenfahrzeug 10 ausgehend von der Darstellung gemäß Figur 1 auf die streckenseitige Sendeeinrichtung 30 zu und über diese hinweg, so wird zunächst die erste bzw. vordere Empfangsantenne 41 der Erkennungseinrichtung 40 in den Bereich des von dem ersten Querleiter 31a der Leiterschleife 31 erzeugten Magnetfelds gelangen und ein entsprechendes Empfangssignal E41 erzeugen (siehe Figur 4). Anschließend wird die erste Empfangsantenne 41 in den Bereich des zweiten Querleiters 31b gelangen und dessen Magnetfeld erkennen.

Entsprechendes gilt für die zweite bzw. hintere Empfangsantenne 42, die orts- und zeitversetzt ein entsprechendes Empfangssignal E42 (siehe Figur 4) erzeugen wird.

Die Figur 3 zeigt in einem Querschnitt das von der streckenseitigen Sendeeinrichtung 30 erzeugte Magnetfeld M in der X-Z-Ebene. Es lässt sich erkennen, dass im Bereich der beiden Querleiter 31a und 31b die in Fahrzeuglängsrichtung X bzw. in Streckenlängsrichtung X ausgerichtete Magnetfeldkomponente besonders ausgeprägt ist und somit eine besonders große Amplitude aufweist.

Im Bereich zwischen den beiden Querleitern 31a und 31b ist die in Fahrzeuglängsrichtung X ausgerichtete Magnetfeldkomponente relativ klein; in diesem Bereich dominiert die in Z-Richtung ausgerichtete Magnetfeldkomponente des Magnetfelds M.

Die Figur 4 zeigt über der Streckenlängsrichtung X und damit bei einem Überfahren der Sendeeinrichtung 30 im zeitlichen Verlauf über der Zeit t die Empfangsleistung E41 und E42 der beiden Empfangsantennen 41 und 42. Da die Flächennormalen Nb der Empfangsantennen 41 und 42 in Fahrzeuglängsrichtung X ausgerichtet sind, sind die Empfangsantennen 41 und 42 für die in Fahrzeuglängsrichtung X ausgerichtete Magnetfeldkomponente Mx empfindlich und messen diese.

Es lässt sich in der Figur 4 erkennen, dass die Empfangsleistungen E41 und E42 der beiden Empfangsantennen 41 und 42 phasenverschoben sind, da zunächst die erste Empfangsantenne 41 in den Bereich der streckenseitigen Sendeeinrichtung 30 gelangen wird und erst nachfolgend die zweite Empfangsantenne 42. Die räumliche Position bzw. der jeweilige Ort des Schienenfahrzeugs 10 bei Auftreten der Nulldurchgänge bzw. Phasenwechsel der Empfangsleistungen E41 und E42 ist in der Figur mit dem Bezugszeichen x1 bzw. x2 gekennzeichnet.

Mit Blick auf eine optimale Auswertung der Empfangsleistungen wird es als vorteilhaft angesehen, wenn der Abstand Ab zwischen den beiden Empfangsantennen 41 und 42 derart bemessen ist, dass bei einem Überfahren der streckenseitigen Sendeeinrichtung 30 die Phase der Empfangsleistung 41 der ersten Empfangsantenne 41 das Vorzeichen wechselt (vgl. Ort X1 in Figur 4), wenn der Betrag der Empfangsleistung E42 der zweiten Empfangsantenne 42 zum ersten Mal (beim jeweiligen Überfahren der Leiterschleife 31 in X-Richtung) maximal wird, und die Phase der Empfangsleistung E42 der zweiten Empfangsantenne 42 das Vorzeichen wechselt (vgl. Ort X2 in Figur 4), wenn der Betrag der Empfangsleistung E41 der ersten Empfangsantenne 41 zum zweiten Mal (bei demselben Überfahrvorgang der Leiterschleife 31) maximal wird.

Ein solches Empfangsverhalten lässt sich erreichen, wenn der Abstand As zwischen den beiden Empfangsantennen 41 und 42 genauso groß oder zumindest näherungsweise so groß ist wie der Abstand Ab zwischen den Querleitern 31a und 31b der Leiterschleife 31 der streckenseitigen Sendeeinrichtung 30.

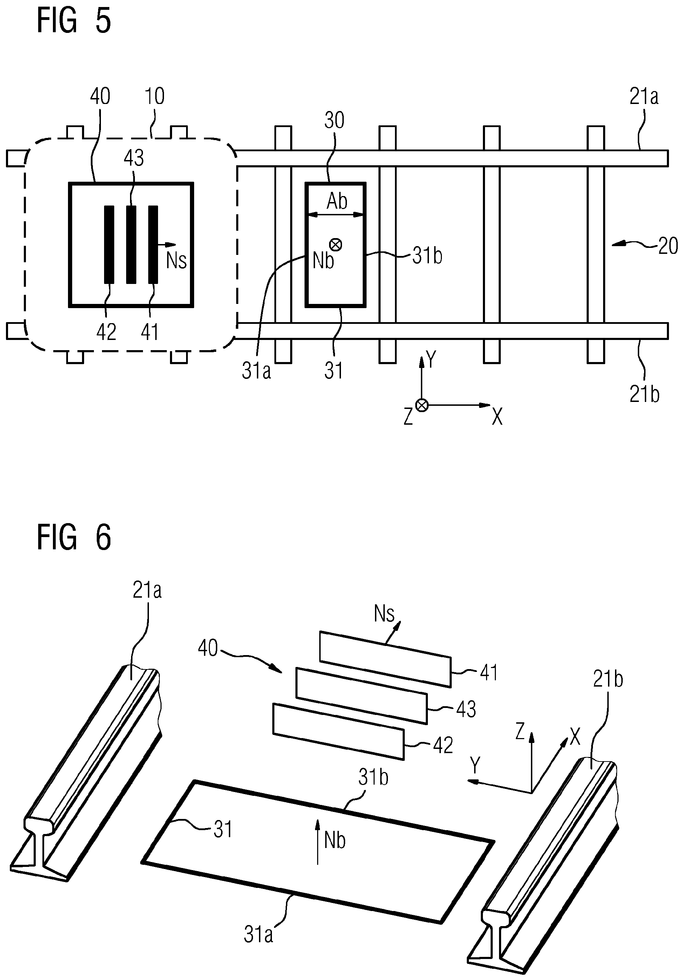

Die Figur 5 zeigt beispielhaft eine Anordnung, bei der ein eine Schienenstrecke 20 befahrendes Schienenfahrzeug 10 eine Erkennungseinrichtung 40 mit drei Empfangsantennen 41, 42 und 43 aufweist. Die dritte Empfangsantenne 43 ist vorzugsweise mittig zwischen der ersten und zweiten Empfangsantenne 41 und 42 angeordnet.

Die Figur 6 zeigt die Erkennungseinrichtung 40 mit den drei Empfangsantennen 41, 42 und 43 nochmals in einer dreidimensionalen Darstellung schräg von der Seite.

Fährt das in der Figur 5 dargestellte Schienenfahrzeug 10 in den Bereich der streckenseitigen Sendeeinrichtung 30 hinein, so wird die Empfangsleistung bzw. der Messwert der dritten Empfangsantenne 43 dem Verlauf der Empfangsleistungen der beiden Empfangsantennen 41 und 42 entsprechen (siehe Figur 4) und mittig zwischen diesen beiden Verläufen liegen.

Obwohl die Erfindung im Detail durch bevorzugte Ausführungsbeispiele näher illustriert und beschrieben wurde, so ist die Erfindung nicht durch die offenbarten Beispiele eingeschränkt.

Der Schutzumfang der Erfindung ist ausschließlich durch die Merkmale der unabhängigen Ansprüche definiert

## Patentansprüche

1. Fahrzeug mit einer Erkennungseinrichtung (40) zum Erkennen seitens einer streckenseitigen Sendeeinrichtung (30) ausgesendeter elektromagnetischer Strahlung,
wobei
- die Erkennungseinrichtung (40) zumindest zwei Empfangsantennen (41, 42) aufweist, die zum Empfangen einer in Fahrzeuglängsrichtung (X) ausgerichteten Magnetfeldkomponente (Mx) der elektromagnetischen Strahlung geeignet sind,
- die zumindest zwei Empfangsantennen (41, 42) in Fahrzeuglängsrichtung (X) versetzt angeordnet sind und
- jede der zumindest zwei Empfangsantennen (41, 42) jeweils mindestens eine Leiterschleife umfasst, deren Flächennormale (Ns) in Fahrzeuglängsrichtung (X) ausgerichtet ist.

2. Fahrzeug nach dem voranstehenden Anspruch,
**dadurch gekennzeichnet, dass**
der Abstand (As) zwischen einer ersten Empfangsantenne (41) der zumindest zwei Empfangsantennen (41, 42) der Erkennungseinrichtung (40) und einer zweiten Empfangsantenne (42) der zumindest zwei Empfangsantennen (41, 42) der Erkennungseinrichtung (40) zwischen 10 und 30 cm liegt.

3. Fahrzeug nach einem der voranstehenden Ansprüche 1 bis 2, **dadurch gekennzeichnet, dass**
mittig zwischen der ersten und zweiten Empfangsantenne eine dritte Empfangsantenne (43) angeordnet ist.

4. Fahrzeug nach einem der voranstehenden Ansprüche,
**dadurch gekennzeichnet, dass**
die Erkennungseinrichtung (40) zumindest drei Empfangsantennen (41, 42, 43) aufweist.

5. Fahrzeug nach Anspruch 4,
**dadurch gekennzeichnet, dass**
die zumindest drei Empfangsantennen (41, 42, 43) äquidistant angeordnet sind.

6. Anordnung mit zumindest einem Fahrzeug und zumindest einer streckenseitigen Sendeeinrichtung (30),
**dadurch gekennzeichnet, dass**
das zumindest eine Fahrzeug ein Fahrzeug nach einem der voranstehenden Ansprüche ist.

7. Anordnung nach Anspruch 6,
**dadurch gekennzeichnet, dass**
das Fahrzeug ein Schienenfahrzeug (10) ist und die streckenseitige Sendeeinrichtung (30) eine streckenseitige Balise ist.

8. Anordnung nach einem der Ansprüche 6 oder 7,
**dadurch gekennzeichnet, dass** der Abstand (As) zwischen einer ersten Empfangsantenne (41) der zumindest zwei Empfangsantennen (41, 42) der Erkennungseinrichtung (40) und einer zweiten Empfangsantenne (42) der zumindest zwei Empfangsantennen (41, 42) der Erkennungseinrichtung (40) derart bemessen ist, dass bei einem Überfahren der Sendeeinrichtung (30) die Phase des Messwerts der ersten Empfangsantenne (41) das Vorzeichen wechselt, wenn der Betrag des Messwerts der zweiten Empfangsantenne (42) maximal wird und die Phase des Messwerts der zweiten Empfangsantenne (42) das Vorzeichen wechselt, wenn der Betrag des Messwerts der ersten Empfangsantenne (41) maximal wird.

9. Anordnung nach einem der Ansprüche 6 bis 8,
**dadurch gekennzeichnet, dass**
- die Erkennungseinrichtung (40) zum Erkennen elektromagnetischer Strahlung einer streckenseitigen Sendeeinrichtung (30) ausgebildet ist, die mindestens eine streckenseitige Leiterschleife (31) umfasst, deren Flächennormale (Nb) vertikal ausgerichtet ist,
- wobei ein erster Querleiter (31a) dieser streckenseitigen Leiterschleife (31) senkrecht zur Streckenlängsrichtung angeordnet ist und ein dazu in einem vorgegebenen Querleiterabstand (Ab) angeordneter zweiter Querleiter (31b) ebenfalls senkrecht zur Streckenlängsrichtung angeordnet ist, und
- wobei der Abstand (As) zwischen einer ersten Empfangsantenne (41) der Erkennungseinrichtung (40) und einer zweiten Empfangsantenne (42) der Erkennungseinrichtung (40) so groß wie der Querleiterabstand (Ab) ist oder in einem Bereich von ± 50% des Querleiterabstands (Ab) liegt.

10. Anordnung nach einem der Ansprüche 6 bis 9,
**dadurch gekennzeichnet, dass** der Abstand (As) zwischen einer ersten und einer zweiten Empfangsantenne (41, 42) der Erkennungseinrichtung (40), insbesondere der Abstand zwischen der in Fahrzeuglängsrichtung (X) gesehen vordersten und der in Fahrzeuglängsrichtung (X) gesehen hintersten Empfangsantenne im Falle von mehr als zwei Empfangsantennen, derart bemessen ist, dass bei einem Überfahren der Sendeeinrichtung (30) die Phase des Messwerts der ersten, insbesondere der vordersten, Empfangsantenne (41) das Vorzeichen wechselt, wenn der Betrag des Messwerts der zweiten, insbesondere der hintersten, Empfangsantenne (42) maximal wird, und die Phase des Messwerts der zweiten, insbesondere der hintersten, Empfangsantenne (42) das Vorzeichen wechselt, wenn der Betrag des Messwerts der ersten, insbesondere der vordersten, Empfangsantenne (41) maximal wird.

11. Anordnung nach einem der Ansprüche 6 bis 10,
**dadurch gekennzeichnet, dass**
- die streckenseitige Sendeeinrichtung (30) mindestens eine streckenseitige Leiterschleife (31) umfasst, deren Flächennormale (Nb) vertikal ausgerichtet ist,
- ein erster Querleiter (31a) der streckenseitigen Leiterschleife (31) senkrecht zur Streckenlängsrichtung angeordnet ist und ein dazu in einem vorgegebenen Querleiterabstand angeordneter zweiter Querleiter (31b) ebenfalls senkrecht zur Streckenlängsrichtung angeordnet ist, und
- der Abstand (As) zwischen den Empfangsantennen (41, 42) der Erkennungseinrichtung (40) im Falle zweier Empfangsantennen (41, 42) oder der Abstand zwischen der in Fahrzeuglängsrichtung (X) gesehen vordersten und der in Fahrzeuglängsrichtung (X) gesehen hintersten Empfangsantenne im Falle von mehr als zwei Empfangsantennen (41, 42) so groß wie der Querleiterabstand (Ab) ist oder in einem Bereich von ± 50% des Querleiterabstands (Ab) liegt.

12. Erkennungseinrichtung (40) zum Erkennen seitens einer streckenseitigen Sendeeinrichtung (30) ausgesendeter elektromagnetischer Strahlung,
**dadurch gekennzeichnet, dass**
- die Erkennungseinrichtung (40) zumindest zwei Empfangsantennen (41, 42) aufweist, die zum Empfangen einer Magnetfeldkomponente (Mx) elektromagnetischer Strahlung geeignet sind,
- die Erkennungseinrichtung (40) an einem Fahrzeug derart montierbar ist, dass die zumindest zwei Empfangsantennen (41, 42) zum Empfangen einer in Fahrzeuglängsrichtung (X) ausgerichteten Magnetfeldkomponente (Mx) der elektromagnetischen Strahlung geeignet sind,
- die zumindest zwei Empfangsantennen (41, 42) in Fahzeugrichtung (X) versetzt angeordnet sind und
- jede der zumindest zwei Empfangsantennen (41, 42) jeweils mindestens eine Leiterschleife umfasst, deren Flächennormale (Ns) in Fahrzeuglängsrichtung (X) ausgerichtet ist.

13. Verfahren zum Betreiben einer Anordnung, die zumindest ein Fahrzeug und zumindest eine streckenseitige Sendeeinrichtung (30) umfasst,
**dadurch gekennzeichnet, dass** eine in Streckenlängsrichtung (X) ausgerichtete Magnetfeldkomponente (Mx) elektromagnetischer Strahlung, die von der streckenseitigen Sendeeinrichtung (30) ausgesandt wird, vom Fahrzeug mit zumindest zwei Empfangsantennen (41, 42), die in Streckenlängsrichtung (X) versetzt angeordnet sind, wobei jede der zumindest zwei Empfangsantennen (41, 42) jeweils mindestens eine Leiterschleife umfasst, deren Flächennormale (Ns) in Fahrzeuglängsrichtung (X) ausgerichtet ist, empfangen wird.

14. Verfahren nach Anspruch 13,
**dadurch gekennzeichnet, dass**
- der Abstand (As) zwischen einer ersten und einer zweiten Empfangsantenne (41) der Erkennungseinrichtung (40), insbesondere der Abstand zwischen der in Fahrzeuglängsrichtung (X) gesehen vordersten und der in Fahrzeuglängsrichtung (X) gesehen hintersten Empfangsantenne im Falle von mehr als zwei Empfangsantennen (41, 42), derart bemessen ist, dass bei einem Überfahren der Sendeeinrichtung (30) die Phase des Messwerts der ersten, insbesondere der vordersten, Empfangsantenne (41) das Vorzeichen wechselt, wenn der Betrag des Messwerts der zweiten, insbesondere der hintersten, Empfangsantenne (42) maximal wird, und die Phase des Messwerts der zweiten, insbesondere der hintersten, Empfangsantenne (42) das Vorzeichen wechselt, wenn der Betrag des Messwerts der ersten, insbesondere der vordersten, Empfangsantenne (41) maximal wird, und
- die Erkennungseinrichtung (40) die Messwerte der Empfangsantennen (41, 42) auswertet.

## Claims

1. Vehicle with a detection device (40) for detection on the part of a route-side transmitter device (30) of emitted electromagnetic radiation,
wherein
- the detection device (40) has at least two receiving antennas (41, 42), which are suitable for receiving a magnetic field component (Mx) of the electromagnetic radiation oriented in the vehicle longitudinal direction (X),
- the at least two receiving antennas (41, 42) are arranged offset in the vehicle longitudinal direction (X) and
- each of the at least two receiving antennas (41, 42) comprises at least one conductor loop in each case, the surface normal (Ns) of which is oriented in the vehicle longitudinal direction (X).

2. Vehicle according to the preceding claim,
**characterised in that**
the spacing (As) between a first receiving antenna (41) of the at least two receiving antennas (41, 42) of the detection device (40) and a second receiving antenna (42) of the at least two receiving antennas (41, 42) of the detection device (40) lies between 10 and 30 cm.

3. Vehicle according to one of the preceding claims 1 to 2, **characterised in that**
a third receiving antenna (43) is arranged in the middle between the first and second receiving antenna.

4. Vehicle according to one of the preceding claims, **characterised in that**
the detection device (40) has at least three receiving antennas (41, 42, 43).

5. Vehicle according to claim 4,
**characterised in that**
the at least three receiving antennas (41, 42, 43) are arranged in an equidistant manner.

6. Arrangement with at least one vehicle and at least one route-side transmitter device (30),
**characterised in that**
the at least one vehicle is a vehicle according to one of the preceding claims.

7. Arrangement according to claim 6,
**characterised in that**
the vehicle is a rail vehicle (10) and the route-side transmitter device (30) is a route-side balise.

8. Arrangement according to one of claims 6 or 7,
**characterised in that**
the spacing (As) between a first receiving antenna (41) of the at least two receiving antennas (41, 42) of the detection device (40) and a second receiving antenna (42) of the at least two receiving antennas (41, 42) of the detection device (40) is dimensioned such that, when the transmitter device (30) is travelled over, the phase of the measured value of the first receiving antenna (41) switches its sign if the amount of the measured value of the second receiving antenna (42) is at a maximum, and the phase of the measured value of the second receiving antenna (42) switches its sign if the amount of the measured value of the first receiving antenna (41) is at a maximum.

9. Arrangement according to one of claims 6 to 8,
**characterised in that**
- the detection device (40) is embodied for detecting electromagnetic radiation of a route-side transmitter device (30), which comprises at least one route-side conductor loop (31), the surface normal (Nb) of which is oriented vertically,
- wherein a first transverse conductor (31a) of said route-side conductor loop (31) is arranged perpendicular to the route longitudinal direction and a second transverse conductor (31b) arranged with a predetermined transverse conductor spacing (Ab) in relation thereto is likewise arranged perpendicular to the route longitudinal direction, and
- wherein the spacing (As) between a first receiving antenna (41) of the detection device (40) and a second receiving antenna (42) of the detection device (40) is as large as the transverse conductor spacing (Ab) or lies in a range of ± 50% of the transverse conductor spacing (Ab).

10. Arrangement according to one of claims 6 to 9,
**characterised in that**
the spacing (As) between a first and a second receiving antenna (41, 42) of the detection device (40), in particular the spacing between the frontmost receiving antenna seen in the vehicle longitudinal direction (X) and the rearmost receiving antenna seen in the vehicle longitudinal direction (X) in the case of more than two receiving antennas, is dimensioned such that, when the transmitter device (30) is travelled over, the phase of the measured value of the first, in particular frontmost receiving antenna (41) switches its sign if the amount of the measured value of the second, in particular rearmost receiving antenna (42) is at a maximum, and the phase of the measured value of the second, in particular the rearmost receiving antenna (42) switches its sign if the amount of the measured value of the first, in particular frontmost receiving antenna (41) is at a maximum.

11. Arrangement according to one of claims 6 to 10,
**characterised in that**
- the route-side transmitter device (30) comprises at least one route-side conductor loop (31), the surface normal (Nb) of which is oriented vertically,
- a first transverse conductor (31a) of the route-side conductor loop (31) is arranged perpendicular to the route longitudinal direction and a second transverse conductor (31b) arranged with a predetermined transverse conductor spacing in relation thereto is likewise arranged perpendicular to the route longitudinal direction, and
- the spacing (As) between the receiving antennas (41, 42) of the detection device (40), in the case of two receiving antennas (41, 42), or the spacing between the frontmost receiving antenna seen in the vehicle longitudinal direction (X) and the rearmost receiving antenna seen in the vehicle longitudinal direction (X), in the case of more than two receiving antennas (41, 42), is as large as the transverse conductor spacing (Ab) or lies in a range of ± 50% of the transverse conductor spacing (Ab).

12. Detection device (40) for detection on the part of a route-side transmitter device (30) of emitted electromagnetic radiation,
**characterised in that**
- the detection device (40) has at least two receiving antennas (41, 42), which are suitable for receiving a magnetic field component (Mx) of electromagnetic radiation,
- the detection device (40) is able to be mounted onto a vehicle in such a manner that the at least two receiving antennas (41, 42) are suitable for receiving a magnetic field component (Mx) of the electromagnetic radiation oriented in the vehicle longitudinal direction (X),
- the at least two receiving antennas (41, 42) are arranged offset in the vehicle longitudinal direction (X) and
- each of the at least two receiving antennas (41, 42) comprises at least one conductor loop in each case, the surface normal (Ns) of which is oriented in the vehicle longitudinal direction (X).

13. Method for operating an arrangement, which comprises at least one vehicle and at least one route-side transmitter device (30),
**characterised in that**
a magnetic field component (Mx), oriented in the route longitudinal direction (X), of electromagnetic radiation which is sent by the route-side transmitter device (30), is received by the vehicle using at least two receiving antennas (41, 42) which are arranged offset in the route longitudinal direction (X), wherein each of the at least two receiving antennas (41, 42) comprises at least one conductor loop in each case, the surface normal (Ns) of which is oriented in the vehicle longitudinal direction (X).

14. Method according to claim 13,
**characterised in that**
- the spacing (As) between a first and a second receiving antenna (41) of the detection device (40), in particular the spacing between the frontmost receiving antenna seen in the vehicle longitudinal direction (X) and the rearmost receiving antenna seen in the vehicle longitudinal direction (X) in the case of more than two receiving antennas (41, 42), is dimensioned such that, when the transmitter device (30) is travelled over, the phase of the measured value of the first, in particular frontmost receiving antenna (41) switches its sign if the amount of the measured value of the second, in particular rearmost receiving antenna (42) is at a maximum, and the phase of the measured value of the second, in particular the rearmost receiving antenna (42) switches its sign if the amount of the measured value of the first, in particular frontmost receiving antenna (41) is at a maximum, and
- the detection device (40) evaluates the measured values of the receiving antennas (41, 42).

## Revendications

1. Véhicule ayant un dispositif (40) d'identification pour l'identification du rayonnement électromagnétique émis de la part (30) d'un dispositif d'émission sur la voie,
dans lequel
- le dispositif (40) d'identification a au moins deux antennes (41, 42) de réception, qui sont propres à la réception d'une composante (Mx) de champ magnétique, dirigée dans une direction (X) longitudinale du véhicule, du rayonnement électromagnétique,
- les au moins deux antennes (41, 42) de réception sont disposées de manière décalée dans la direction (X) longitudinale du véhicule et
- chacune des au moins deux antennes (41, 42) de réception comprend respectivement au moins une boucle conductrice, dont la normale (Ns) à la surface est dirigée dans la direction (X) longitudinale du véhicule.

2. Véhicule suivant la revendication précédente,
**caractérisé en ce que**
la distance (As) entre une première antenne (41) de réception des au moins deux antennes (41, 42) de réception du dispositif (40) d'identification et une deuxième antenne (42) de réception des au moins deux antennes (41, 42) de réception du dispositif (40) d'identification est comprise entre 10 et 30 cm.

3. Véhicule suivant l'une des revendications 1 à 2 précédentes, **caractérisé en ce qu'**
une troisième antenne (43) de réception est disposée au milieu entre la première et la deuxième antennes de réception.

4. Véhicule suivant l'une des revendications précédentes,
**caractérisé en ce que**
le dispositif (40) d'identification a au moins trois antennes (41, 42, 43) de réception.

5. Véhicule suivant la revendication 4,
**caractérisé en ce que**
les au moins trois antennes (41, 42, 43) de réception sont disposées de manière équidistante.

6. Agencement comprenant au moins un véhicule et au moins un dispositif (30) d'émission sur la voie,
**caractérisé en ce que**
le au moins un véhicule est un véhicule suivant l'une des revendications précédentes.

7. Agencement suivant la revendication 6,
**caractérisé en ce que**
le véhicule est un véhicule (10) ferroviaire et le dispositif (30) d'émission sur la voie est une balise sur la voie.

8. Agencement suivant l'une des revendications 6 ou 7,
**caractérisé en ce que**
la distance (As) entre une première antenne (41) de réception des au moins deux antennes (41, 42) de réception du dispositif (40) d'identification et une deuxième antenne (42) de réception des au moins deux antennes (41, 42) de réception du dispositif (40) d'identification est telle que, lors d'un franchissement du dispositif (30) d'émission, la phase de la valeur de mesure de la première antenne (41) de réception change de signe, si la valeur absolue de la valeur de mesure de la deuxième antenne (42) de réception devient maximum, et la phase de la valeur de mesure de la deuxième antenne (42) de réception change de signe, si la valeur absolue de la valeur de mesure de la première antenne (41) de réception devient maximum.

9. Agencement suivant l'une des revendications 6 à 8,
**caractérisé en ce que**
- le dispositif (40) d'identification est constitué pour l'identification du rayonnement électromagnétique d'un dispositif (30) d'émission sur la voie, qui comprend au moins une boucle (31) conductrice sur la voie, dont la normale (Nb) à la surface est dirigée verticalement,
- dans lequel un premier conducteur (31a) transversal de cette boucle (31) conductrice sur la voie est disposé perpendiculairement à la direction longitudinale de la voie et un deuxième conducteur (31b) transversal, disposé à une distance (Ab) transversale entre conducteurs donnée à l'avance, est disposé également perpendiculairement à la direction longitudinale de la voie, et
- dans lequel la distance (As) entre une première antenne (41) de réception du dispositif (40) d'identification et une deuxième antenne (42) de réception du dispositif (40) d'identification est aussi grande que la distance (Ab) entre conducteurs ou est dans une plage de ± 50 % de la distance (Ab) transversale entre les conducteurs.

10. Agencement suivant l'une des revendications 6 à 9,
**caractérisé en ce que**
la distance (As) entre une première et une deuxième antennes (41, 42) de réception du dispositif (40) d'identification, en particulier la distance entre l'antenne de réception la plus en avant, considéré dans la direction (X) longitudinale du véhicule, et l'antenne de réception la plus en arrière, considéré dans la direction (X) longitudinale du véhicule est, dans le cas où il y a plus de deux antennes de réception, telle que, lors d'un franchissement du dispositif (30) d'émission, la phase de la valeur de mesure de la première, en particulier de l'antenne (41) de réception la plus en avant, change de signe, si la valeur absolue de la valeur de mesure de la deuxième antenne (42) de réception, en particulier la plus en arrière devient maximum, et la phase de la valeur de mesure de la deuxième antenne (42) de réception, en particulier de la plus en arrière, change de signe, si la valeur absolue de la valeur de mesure de la première antenne (41) de réception, en particulier de la plus en avant, devient maximum.

11. Agencement suivant l'une des revendications 6 à 10,
**caractérisé en ce que**
- le dispositif (30) d'émission sur la voie comprend au moins une boucle (31) conductrice sur la voie, dont la normale (Nb) à la surface est dirigée verticalement,
- un premier conducteur (31a) transversal de la boucle (31) de conducteur sur la voie est disposé perpendiculairement à la direction longitudinale de la voie et un deuxième conducteur (31b) transversal, disposé à une distance transversale entre conducteurs donnée à l'avance, est disposé également perpendiculairement à la direction longitudinale de la voie, et
- la distance (As) entre les antennes (41, 42) de réception du dispositif (40) d'identification, dans le cas de deux antennes (41, 42) de réception ou la distance entre l'antenne la plus avant, considéré dans la direction (X) longitudinale du véhicule, et la plus en arrière, considéré dans la direction (X) longitudinale du véhicule, dans le cas de plus de deux antennes (41, 42) de réception est aussi grande que la distance (Ab) transversale entre conducteurs ou est dans une plage de ± 50 % de la distance (Ab) transversale entre conducteurs.

12. Dispositif (40) d'identification pour l'identification du rayonnement électromagnétique émis de la part d'un dispositif (30) d'émission sur la voie,
**caractérisé en ce que**
- le dispositif (40) d'identification a au moins deux antennes (41, 42) de réception, qui sont propres à la réception d'une composante (Mx) de champ magnétique du rayonnement électromagnétique,
- le dispositif (40) d'identification peut être monté sur un véhicule, de manière à ce que les au moins deux antennes (41, 42) de réception soient propres à la réception d'une composante (Mx) de champ magnétique, dirigée dans la direction (X) longitudinale du véhicule, du rayonnement électromagnétique,
- les au moins deux antennes (41, 42) de réception sont disposées de manière décalée dans la direction (X) longitudinale du véhicule et
- chacune des au moins deux antennes (41, 42) de réception comprend respectivement au moins une boucle conductrice, dont la normale (Ns) à la surface est dirigée dans la direction (X) longitudinale du véhicule.

13. Procédé pour faire fonctionner un agencement, qui comprend au moins un véhicule et au moins un dispositif (30) d'émission sur la voie,
**caractérisé en ce que**
on reçoit une composante (Mx) de champ magnétique, dirigée dans la direction (X) longitudinale de la voie, du rayonnement électromagnétique, qui est émis par le dispositif (30) d'émission sur la voie, par le véhicule ayant au moins deux antennes (41, 42) de réception, qui sont montées de manière décalée dans la direction (X) longitudinale de la voie, dans lequel chacune des au moins deux antennes (41, 42) de réception comprend respectivement au moins une boucle conductrice, dont la normale (Ns) à la surface est dirigée dans la direction (X) longitudinale du véhicule.

14. Procédé suivant la revendication 13,
**caractérisé en ce que**
- la distance (As) entre une première et une deuxième antennes (41, 42) de réception du dispositif (40) d'identification, en particulier la distance entre l'antenne (41) de réception la plus en avant, considéré dans la direction (X) longitudinale du véhicule, et l'antenne de réception la plus en arrière, considéré dans la direction (X) longitudinale du véhicule est, dans le cas où il y a plus de deux antennes de réception, telle que, lors d'un franchissement du dispositif (30) d'émission, la phase de la valeur de mesure de la première, en particulier de l'antenne (41) de réception la plus en avant, change de signe, si la valeur absolue de la valeur de mesure de la deuxième antenne (42) de réception, en particulier de la plus en arrière, devient maximum et la phase de la valeur de mesure de la deuxième antenne (42) de réception, en particulier de la plus en arrière, change de signe, si la valeur absolue de la valeur de mesure de la première antenne (41) de réception, en particulier de la plus en avant, devient maximum, et
- le dispositif (40) d'identification exploite les valeurs de mesure des antennes (41, 42) de réception.
